(19) Europäisches Patentamt / European Patent Office / Office européen des brevets

(11) **EP 4 641 756 A1**

(12) **EUROPEAN PATENT APPLICATION**
published in accordance with Art. 153(4) EPC

(43) Date of publication:
**29.10.2025 Bulletin 2025/44**

(21) Application number: **23907523.7**

(22) Date of filing: **07.12.2023**

(51) International Patent Classification (IPC):
***H01M 10/54*** *(2006.01)*

(52) Cooperative Patent Classification (CPC):
**H01M 10/54;** Y02W 30/84

(86) International application number:
**PCT/KR2023/020116**

(87) International publication number:
**WO 2024/136237 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2022 KR 20220180194**

(71) Applicants:
• **POSCO Holdings Inc.**
**Pohang-si, Gyeongsangbuk-do 37859 (KR)**
• **POSCO Co., Ltd**
**Pohang-si, Gyeongsangbuk-do 37859 (KR)**

(72) Inventors:
• **HAN, Sangwoo**
**Pohang-si, Gyeongsangbuk-do 37859 (KR)**
• **LEE, Juseung**
**Pohang-si, Gyeongsangbuk-do 37859 (KR)**
• **KIM, Wan-Yi**
**Pohang-si, Gyeongsangbuk-do 37859 (KR)**
• **CHO, Hyunjin**
**Pohang-si, Gyeongsangbuk-do 37859 (KR)**
• **PARK, Joongkil**
**Pohang-si, Gyeongsangbuk-do 37859 (KR)**

(74) Representative: **Pfenning, Meinig & Partner mbB**
**Patent- und Rechtsanwälte**
**Theresienhöhe 11a**
**80339 München (DE)**

(54) **METHOD FOR DISPOSAL OF WASTE BATTERY**

(57) The present disclosure relates to a method for processing a waste battery including: providing a waste battery; discharging the waste battery; and crushing the discharged waste battery, wherein the discharging of the waste battery has a discharge rate of 0.5 Voltage/min or less, and satisfies Equation 1:

<Equation 1>

$$0.1 \leq \text{discharge rate} \times \text{expansion amount} \times \text{maximum temperature} \leq 50.0$$

(the discharge rate represents the discharge rate [Voltage/min] at the discharging of the waste battery, and the expansion amount [mm] and the maximum temperature [°C] respectively represent the expansion amount and the maximum temperature of the waste battery in the discharging of the waste battery.)

EP 4 641 756 A1

# FIG. 1A

**Description**

## CROSS-REFERENCE TO RELATED APPLICATION

This application claims priority to and the benefit of Korean Patent Application No. 10-2022-0180194 filed with the Korean Intellectual Property Office on December 21, 2022, the entire contents of which are incorporated herein by reference.

## BACKGROUND OF THE INVENTION

### (a) Field of the Invention

The present disclosure relates to a method for processing batteries, and more specifically, relates to a method for processing waste batteries.

### (b) Description of the Related Art

As demand for electric vehicles increases worldwide, the issue of waste battery disposal from electric vehicles is emerging as a social problem. In the case of lithium rechargeable batteries, which are the main raw materials of waste batteries, organic solvents, explosive materials, and heavy metal materials such as Ni, Co, Mn, and Fe are contained, but Ni, Co, Mn, and Li have high scarcity value as valuable metals, and the recovery and recycling process after lithium rechargeable batteries are discarded is emerging as an important research field.

Specifically, the lithium rechargeable battery mainly includes copper and aluminum used as a current collector, oxide containing Li, Ni, Co, and Mn forming a positive electrode material, and graphite used as a negative electrode material, a separating plate separating the positive electrode material and the negative electrode material, and an electrolyte injected into the separating plate. The solvent used as the solvent and salt that constitute the electrolyte is mainly a mixture of carbonate organic materials such as ethylene carbonate and propylene carbonate, and $LiPF_6$ is used as an example.

To utilize the waste battery, interest is growing in the waste battery recycling process, which pulverizes the waste battery to produce intermediate materials such as a crushed waste battery or black powder, and then recovers valuable metals through post-processing, and research on this is actively being conducted.

To recycle the waste battery, the battery must first be physically decomposed, and this physical decomposition may directly lead to problems such as battery explosion or electric shock, so it is a task that requires stability. When the physical decomposition is performed, holes are formed in the battery and discharge is performed in salt water. When the discharge is complete, the battery is shredded and then subjected to high-temperature heat treatment to remove water and electrolytes.

When performing a discharge in the salt water, the salt used contains a large amount of impurities such as Na, K, Cl, Mg, or Ca, which also exist in the waste battery. Since the water used for salt water discharge contains some electrolytes, it is classified as waste water, which increases the burden on environmental treatment. In the case of the discharge technology developed previously, lithium ions move from the negative electrode to the positive electrode in the battery during discharge, and when the use of the lithium ions is finished and continuous discharge processing is performed, Cu of the current collector causes electrical decomposition, causing the positive ions to move and be deposited on the positive electrode surface.

It grows on the surface of Cu, passes through a separator, and connects to the negative electrode, thereby generating a short-circuit. During this process, a large amount of heat is generated, the heat is released to the outside, and there is a problem in that it heats the electrolyte inside, increasing the risk of explosion.

## SUMMARY OF THE INVENTION

The present disclosure attempts to provide a waste battery processing method reducing a risk of explosion when performing an electrical discharge.

An embodiment of the present disclosure provides a waste battery processing method including: providing a waste battery; discharging the waste battery; and crushing the discharged waste battery, wherein the discharging of the waste battery has a discharge rate of 0.5 Voltage/min or less, and satisfies Equation 1:

$0.1 \leq |$ discharge rate $\times$ expansion amount $\times$ maximum temperature $| \leq 50.0$         \<Equation 1>

(here, the discharge rate represents the discharge rate [Voltage/min] at the discharging of the waste battery, and the expansion amount [mm] and the maximum temperature [°C] respectively represent the expansion amount and the maximum temperature of the waste battery in the discharging of the waste battery.)

In an embodiment, Equation 1 may satisfy 0.10 to 42.0. In an embodiment, Equation 1 may satisfy 0.19 to 12.0.

In an embodiment, the discharging of the waste battery may include measuring an expansion amount of the waste battery, and controlling a discharge rate and a cooling temperature so that the expansion amount becomes less than 20 mm. In an embodiment, the discharging of the waste battery may include measuring a temperature of the waste battery.

In an embodiment, the measuring a temperature of the waste battery may include controlling the temperature of the waste battery to be 80 °C or below. In an embodiment, the providing of a waste battery or the discharging of the waste battery may include cooling the waste battery.

In an embodiment, the cooling of the waste battery may include cooling the same at 0 °C or below. In an embodiment, the cooling may use a cooling means including at least one of refrigerating machine, air at a low temperature, carbon oxide at a low temperature, nitrogen at a low temperature, dry ice, liquid nitrogen, and water.

In an embodiment, when the battery is configured with a battery pack that is a set of cells, the discharge rate may satisfy Equation 2:

$$\text{Discharge rate} = (\text{per-pack maximum voltage}/\text{number of per-cell batteries connected in series in pack}) \times 0.04 \text{ V/min} \pm 0.05. \qquad \text{<Equation 2>}$$

In another embodiment, the discharge rate may be less than 0.1 V/min. In the other embodiment, the expansion amount of the battery may be 10.5 mm or below.

In an embodiment, when the battery is configured with a battery pack that is a set of cells, the discharge rate satisfies Equation 3:

$$\text{Discharge rate} = (\text{per-pack maximum voltage}/\text{number of per-cell batteries connected in series in pack}) \times 0.5 \text{ V/min} \pm 0.05. \qquad \text{<Equation 3>}$$

In another embodiment, the discharge rate may be 0.2 V/min or below. In the other embodiment, the expansion amount of the battery may be 2 mm or below.

According to the embodiment, the battery processing includes controlling a discharge rate by controlling a surface temperature of the waste battery for discharge during electrical discharge of the waste battery, and performing discharge together with low temperature cooling as a means for increasing the discharge rate.

## BRIEF DESCRIPTION OF THE DRAWINGS

FIG. 1A and FIG. 1B show photographs of a measured battery expansion amount according to a discharge rate.
FIG. 2A and FIG. 2B show graphs on estimated results of temperature and results of expansion amounts.

## DETAILED DESCRIPTION OF THE EMBODIMENTS

It will be understood that, although the terms first, second, third, etc. may be used herein to describe various elements, components, regions, layers, and/or sections, they are not limited thereto. These terms are only used to distinguish one element, component, region, layer, or section from another element, component, region, layer, or section. Thus, a first element, component, region, layer, or section discussed below could be termed a second element, component, region, layer, or section without departing from the teachings of the present disclosure.

The technical terms used herein are to simply mention a particular embodiment and are not meant to limit the present disclosure. An expression used in the singular encompasses an expression of the plural, unless it has a clearly different meaning in the context. In the specification, it is to be understood that terms such as "including", "having", etc., are intended to indicate the existence of specific features, regions, numbers, stages, operations, elements, components, or combinations thereof disclosed in the specification, and are not intended to preclude the possibility that one or more other specific features, regions, numbers, operations, elements, components, or combinations thereof may exist or may be added.

When a part is referred to as being "on" another part, it can be directly on the other part or intervening parts may also be present. In contrast, when an element is referred to as being "directly on" another element, there are no intervening elements therebetween.

Unless otherwise defined, all terms used herein, including technical or scientific terms, have the same meanings as those generally understood by those with ordinary knowledge in the field of art to which the present disclosure belongs. Such terms as those defined in a generally used dictionary are to be interpreted to have the same meanings as contextual meanings in the relevant field of art, and are not to be interpreted to have idealized or excessively formal meanings unless clearly defined in the present application.

Embodiments of the present disclosure will now be described in detail. However, these are presented as examples, and the present disclosure is not limited thereto and is only defined by the scope of the claims to be described later.

A waste battery processing method according to an embodiment may include: providing a waste battery, discharging the waste battery, and crushing the discharged waste battery.

The providing of a waste battery may include providing matter that becomes a base material of the crushed battery material. In detail, the waste battery may be a waste battery of which a life-span has ended. The waste battery may, for example, be a lithium rechargeable battery, and may include a battery cell decomposed from the large capacity battery pack such as that of an electric vehicle.

The discharging of the waste battery may include preventing the risk of explosion caused by an electric power amount remaining in the waste battery. In detail, the discharging of the waste battery is a preprocessing stage for preventing generation of safety issues such as fire by external impacts applied in a subsequent process such as disassembling and pulverizing the waste battery.

In an embodiment, the discharging of the waste battery may be performed by an electrical discharge. In detail, the electrical discharge may be performed with a discharge rate in a predetermined range.

In an embodiment, the discharging of the waste battery may allow the discharge rate of 0.5 Voltage/min or less. In detail, the discharge rate may be 0.05 Voltage/min or less. In further detail, the discharge rate may be 0.01 to 0.05 Voltage/min.

When the battery is discharged within the discharge rate range, a process for recycling the waste battery may be performed while maintaining the expansion amount of the battery at an appropriate range and maintaining stability. When the discharge rate range is higher than the range, a chemical structure in the battery may abruptly change so the battery becomes unstable, and expansion is generated by gasifying the positive electrode material and the electrolyte in the battery.

In an embodiment, the discharging of the waste battery may include controlling the expansion amount of the waste battery by less than 20 mm. The expansion amount of the battery represents quantification of a degree at which the battery expands in a thickness direction in the discharge process. In detail, it may include measuring the expansion amount of the waste battery, and controlling the discharge rate and the cooling temperature by less than 20 mm.

When the expansion amount of the waste battery is higher than the above-described range, a lateral surface may be torn apart, may be gasified, and may generate a fire. In an embodiment, the discharging of the battery may be performed so that the expansion amount of the battery may be 2 mm or less. In detail the expansion amount of the battery may be 1 mm or less, and in further detail, it may be 0.5 mm or less.

When the battery expansion amount is higher than the range, the chemical structure in the battery caused by gasifying of the positive electrode material and the electrolyte so when a post-process is performed during the process for recycling the waste battery, stability may be an issue.

In an embodiment, the discharging of the waste battery may include measuring a temperature of the waste battery. In detail, the measuring of a temperature of the waste battery may include controlling the temperature of the waste battery to be 80 °C or lower than that.

The measuring of a temperature of the waste battery may include measuring the temperature of the waste battery while discharging the waste battery. By measuring the temperature of the waste battery, stability of the waste battery may be confirmed, and the waste battery may be discharged.

In an embodiment, the providing of a waste battery or the discharging of the waste battery may include cooling the waste battery. The waste battery may undergo a discharge and crush process at a low temperature by performing cooling.

The cooling may be, for example, performed while providing the waste battery, while discharging the waste battery, or while providing the waste battery and discharging the waste battery. In detail, by performing the cooling in the providing of the waste battery, the expansion amount of the waste battery may be significantly reduced while discharging the waste battery.

In detail, when the temperature of the waste battery becomes higher than 80 °C in the discharging of the waste battery, the cooling may be performed to control it within the above-noted range. the discharging of the waste battery includes the cooling, thereby reducing the risk of generation of fire caused by expansion or destruction of the waste battery in discharging the waste battery.

In an embodiment, the cooling may use a cooling means including at least one of refrigerating machine, air at a low temperature, carbon oxide at a low temperature, nitrogen at a low temperature, dry ice, liquid nitrogen, and water. Regarding the air at a low temperature, the carbon oxide at a low temperature, and the nitrogen at a low temperature, the low temperature is 10 °C or below, and in detail, it indicates the low temperature of 5 °C or below. The cooling means may, as a non-limited example, use various types of cooling methods, for example, a cooling fluid method to cool the waste battery.

In an embodiment, the waste battery processing method may satisfy Equation 1.

$$0.10 \leq | \text{ discharge rate} \times \text{expansion amount} \times \text{maximum temperature} | \leq 50 \qquad \text{<Equation 1>}$$

Here, the discharge rate represents the discharge rate [Voltage/min] at the discharging of the waste battery, and the expansion amount [mm] and the maximum temperature [°C] respectively represent the expansion amount and the maximum temperature of the waste battery in the discharging of the waste battery. Equation 1 represents the absolute value of a product of the discharge rate, the expansion amount, and the maximum temperature, so it has a positive value.

In an embodiment, Equation 1 represents the product of the expansion amount and the discharge rate of the waste battery for the maximum temperature of the waste battery in the discharging of the waste battery so it may be an index of stability. Equation 1 may satisfy 0.10 to 50.0. In detail, Equation 1 may satisfy 0.10 to 42.0, in further detail, 0.19 to 12.0, and in further detail 0.19 to 11.2.

When the value of Equation 1 digresses from an upper limit value, explosion or fire may be generated by excessive expansion and increase of temperature during a discharge. When the value of Equation 1 digresses from a lower limit value, temperature and expansion are stable but the discharge rate is low, thereby spending so much time.

In an embodiment, when the battery is configured with a battery pack that is a set of at least one or more cells, the discharge rate in the discharging of the battery may satisfy Equation 2.

$$\text{Discharge rate} = (\text{per-pack maximum voltage/number of per-cell batteries connected in series in pack}) \times 0.04 \text{ V/min} \pm 0.05 \qquad \text{<Equation 2>}$$

The battery may be configured with the pack in which at least one or more cells are arranged in series. The pack may be a set of modules including at least one or more cells. Equation 2 may be an index for the discharge rate of 0 °C or higher when the battery is a battery pack. Equation 2 may have an upper limit obtained by adding 0.05 to a product of 0.04 V/min and the pack-based maximum voltage of the number of cell-based batteries coupled in series in the pack, and may have a lower limit obtained by subtracting 0.05 from the product of 0.04 V/min and the pack-based maximum voltage of the number of cell-based batteries coupled in series in the pack.

In an embodiment, when satisfying Equation 2, the discharge rate may be less than 0.5 V/min, and in detail, less than 0.1 V/min. When satisfying Equation 2, the expansion amount of the battery may be less than 20 mm, and in detail, less than 10.5 mm. As the condition is satisfied, the battery may be processed safely and without the risk of fire.

In an embodiment, when the battery is configured with the battery pack that is a set of at least one or more cells, the discharge rate in the discharging of the battery may satisfy Equation 3.

$$\text{Discharge rate} = (\text{per-pack maximum voltage/number of per-cell batteries connected in series in pack}) \times 0.5 \text{ V/min} \pm 0.05 \qquad \text{<Equation 3>}$$

Equation 3 may be an index for the discharge rate at the low temperature that is lower than 0 °C when the battery is a battery pack. Equation 3 may have an upper limit obtained by adding 0.05 to a product of 0.5 V/min and the pack-based maximum voltage of the number of cell-based batteries coupled in series in the pack, and may have a lower limit obtained by subtracting 0.05 from the product of 0.5 V/min and the pack-based maximum voltage of the number of cell-based batteries coupled in series in the pack.

When the battery is a battery pack of cells, the discharge rate may be controlled to satisfy above-expressed Equations at the room temperature or low temperature so the expansion amount of the battery may be maintained within an appropriate range, and the waste battery recycling process may be performed, while maintaining stability.

In an embodiment, when Equation 3 is satisfied, the discharge rate may be 0.5 V/min or less, and in detail, 0.2 V/min or less. When Equation 3 is satisfied, the expansion amount of the battery may be less than 20 mm, and in detail, less than 2 mm. As the condition is satisfied, the battery may be processed safely and without the risk of fire.

The crushing of the battery may include applying impact or pressure to the battery so that a portion may be separated from the battery. In an embodiment, the crushing of the battery may include pulverizing the battery, incising the battery, and a combination thereof. In detail the crushing process may include any types of processes for breaking the battery to obtain small fragments.

In an embodiment, the crushing of the battery may use at least one of shearing, compressing, and tensioning. In detail, the crushing may use at least one of a hammer mill, a ball mill, and an agitated ball mill. At least one of disassembling, punching, and milling may be performed by the hammer mill, and this is a non-limiting example, and it is apparent that the it may be shredded using various types of crushing or shredding devices, for example, an industrial shredder.

In an embodiment, the crushing may be performed at least once or more. In detail, the crushing process may be continuously or non-continuously performed at least once or more.

Embodiments and comparative examples will now be described. The embodiments are preferable examples, and the present disclosure is not limited thereto.

Experimental Example 1 - Measuring battery temperature/expansion amount

In the experimental example of the present disclosure, regarding the battery expanded amount, changes of thickness thereof are measured using a micro meter.

According to the experimental example, an NCM pouch-type waste battery is prepared, and battery expanded amounts at the temperatures and discharge rates given in Table 1 are measured.

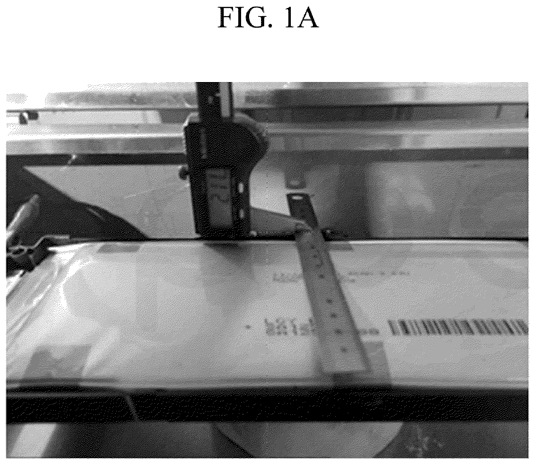

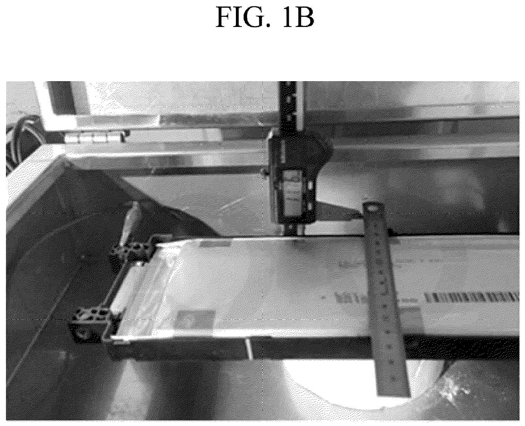

FIG. 1A and FIG. 1B show photographs obtained by measuring an expansion amount of a battery according to an embodiment.

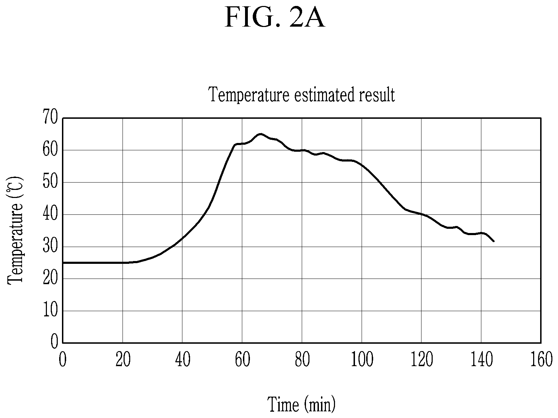

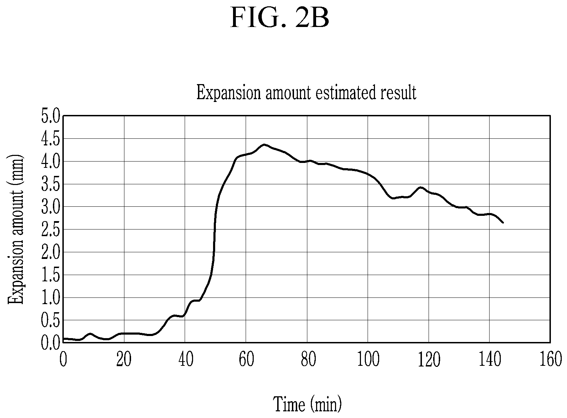

FIG. 2A and FIG. 2B show graphs on estimated results of temperature and results of expansion amounts.

Referring to FIG. 1A, FIG. 1B, FIG. 2A, and FIG. 2B, the battery is discharged at the room temperature of 0.04 Voltage/min-cell through an electrical discharge. It is confirmed that, when the temperature and the temperature of the expansion amount are measured, the temperature increases up to 65 °C. At the time when it reaches 65 °C, the maximum expansion amount of the battery is shown as 4.3 mm.

As described above, the maximum temperature and the expansion amount are measured by adjusting the expansion amount and the temperature of the battery. The battery is not damaged or fired when the discharge rate is 0.05 V/min or less, and the side of the battery is torn apart, is gasified, and is exploded when the maximum temperature increases to 80 °C and the battery is discharge with 0.1 V/min.

<Experimental Example 1>

The battery is measured with 0.01 V/min at the room temperature through an electrical discharge.

<Experimental Example 2>

The battery is measured with 0.02 V/min at the room temperature through an electrical discharge.

<Experimental Example 3>

The battery is measured with 0.04 V/min at the room temperature through an electrical discharge.

<Experimental Example 4>

The battery is measured with 0.05 V/min at the room temperature through an electrical discharge.

<Experimental Example 5>

The battery is measured with 0.1 V/min at the room temperature through an electrical discharge.

Table 1 shows the expansion amount of the battery and whether the battery is fired or damaged according to the battery discharge rate.

(Table 1)

|  | Discharge rate | Maximum temperatur e | Expansion amount | Fired or damaged | discharg e rate × expansion amount× maximum temperatu re | etc., |
|---|---|---|---|---|---|---|
|  | [V/min] | [°C] | [mm] |  |  |  |
| Experime ntal Example 1 | 0.01 | 38 | within 0.5 | × | 0.19 | Example |

(continued)

| | Discharge rate [V/min] | Maximum temperatur e [°C] | Expansion amount [mm] | Fired or damaged | discharg e rate × expansion amount× maximum temperatu re | etc., |
|---|---|---|---|---|---|---|
| Experime ntal Exam- ple 2 | 0.02 | 42 | 0.7 | × | 0.59 | Example |
| Experime ntal Example 3 | 0.04 | 65 | 4.3 | × | 11.18 | Example |
| Experime ntal Example 4 | 0.05 | 80 | 10.5 | × | 42 | Example |
| Experime ntal Example 5 | 0.1 | 95 | 20 or more | O | 190 | Comparat ive Example |

Referring to Table 1, it is found that the fire may be prevented by performing a discharge at the discharge rate of 0.05 V/min or below to discharge the battery at the room temperature. It is found that the maximum temperature is 95 °C when the discharge rate is 0.1 V/min that is higher than 0.05 V/min, the expansion amount is 20 mm or higher, and the side is torn apart, is gasifies, and is fired.

Experimental Example 2 - Cooling the battery

The battery is exploded or fired when an internal electrolyte is gasified, and hence, to prevent this problem, a method for reducing the temperature of the battery in advance, and discharging the same. In detail, when an electrical discharge is performed to perform a forceful discharge, the temperature of the battery is lowered to perform a discharge.
Table 2 expresses the expansion amounts (mm) at the room temperature and the low temperature (-20 °C) when the discharge rates are 0.01, 0.02, 0.03, 0.04, 0.05, 0.1, 0.2, and 0.5.

(Table 2)

| Discharge rate [V/min] | 0.01 | 0.02 | 0.03 | 0.04 | 0.05 | 0.1 | 0.2 | 0.5 |
|---|---|---|---|---|---|---|---|---|
| Room temperatu re expansion amount | within 0.5 | 0.7 | 0.7 | 4.3 | 10.5 | 20 or more | no tests | |
| [mm] | | | | | | | | |
| Low temperatu re (-20°C) expansion amount [mm] | within 0.5 | within 0.5 | within 0.5 | 0.8 | 1 | 1.1 | 1.3 | 2 or more |

Referring to Table 2, regarding the battery expansion amount at the room temperature, it is found that the expansion amount is 20 mm or more when the discharge rate is 0.1 V/min or higher. On the contrary, when the measurement is performed at the low temperature (-20 °C), it is found that the expansion amount of the battery is significantly reduced. The discharge rates of Table 2 are not limited to cells, the cells may be connected in series to configure a module or a pack, and the cells may be multiplied by the discharge rate in series. For example, the pack of 500 V may be processed by connecting the 125 cells of 4 V in series or boosting them up. Hence, when the discharge is performed per pack, the discharge rates of Equation 3 and Equation 4 may be satisfied at the room temperature and the low temperature.

Discharge rate at room temperature (0 °C or higher) = (per-pack maximum voltage / number of per-cell batteries coupled in series in pack) × 0.04 V/min                <Equation 3>

Discharge rate at low temperature (below 0 °C) = (per-pack maximum voltage / number of per-cell batteries coupled in series in pack) $\times$ 0.5 V/min

<Equation 4>

Although the preferred embodiments have been described in detail, the range of rights of the present invention is not limited thereto, and various modifications and improved forms of a person of an ordinary skill in the art using the basic concept defined in the following claims range are also included in the range of rights of the present disclosure.

## Claims

1. A method for processing a waste battery comprising:

   providing a waste battery;
   discharging the waste battery; and
   crushing the discharged waste battery,
   wherein the discharging of the waste battery has a discharge rate of 0.5 Voltage/min or less, and satisfies Equation 1:

   $0.1 \leq$ | discharge rate $\times$ expansion amount $\times$ maximum temperature | $\leq 50.0$

   <Equation 1>

   (here, the discharge rate represents a discharge rate [Voltage/min] in the discharging of the waste battery, and the expansion amount [mm] and the maximum temperature [°C] represent an expansion amount and a maximum temperature of the waste battery in the discharge of the waste battery).

2. The method of claim 1, wherein
   Equation 1 satisfies 0.10 to 42.0.

3. The method of claim 1, wherein
   Equation 1 satisfies 0.19 to 12.0.

4. The method of claim 1, wherein
   the discharging of the waste battery includes measuring an expansion amount of the waste battery, and controlling a discharge rate and a cooling temperature so that the expansion amount becomes less than 20 mm.

5. The method of claim 1, wherein
   the discharging of the waste battery includes measuring a temperature of the waste battery.

6. The method of claim 5, wherein
   the measuring a temperature of the waste battery includes controlling the temperature of the waste battery to be 80 °C or below.

7. The method of claim 1, wherein
   the providing of a waste battery or the discharging of the waste battery includes cooling the waste battery.

8. The method of claim 7, wherein
   the cooling of the waste battery includes cooling the same at 0 °C or below.

9. The method of claim 7, wherein
   the cooling uses a cooling means including at least one of refrigerating machine, air at a low temperature, carbon oxide at a low temperature, nitrogen at a low temperature, dry ice, liquid nitrogen, and water.

10. The method of claim 1, wherein
    when the battery is configured with a battery pack that is a set of cells, the discharge rate satisfies Equation 2:

    Discharge rate = (per-pack maximum voltage/number of per-cell batteries connected in series in pack) $\times$ 0.04 V/min $\pm$ 0.05.

    <Equation 2>

**11.** The method of claim 10, wherein
the discharge rate is less than 0.1 V/min.

**12.** The method of claim 10, wherein
the expansion amount of the battery is 10.5 mm or below.

**13.** The method of claim 7, wherein
when the battery is configured with a battery pack that is a set of cells, the discharge rate satisfies Equation 3:

Discharge rate = (per-pack maximum voltage/number of per-cell batteries connected in series in pack) $\times$ 0.5 V/min $\pm$ 0.05.          <Equation 3>

**14.** The method of claim 13, wherein
the discharge rate is 0.2 V/min or below.

**15.** The method of claim 13, wherein
the expansion amount of the battery is 2 mm or below.

FIG. 1A

FIG. 1B

# FIG. 2A

Temperature estimated result

# FIG. 2B

Expansion amount estimated result

## INTERNATIONAL SEARCH REPORT

| | International application No. |
|---|---|
| | **PCT/KR2023/020116** |

| **A.** | **CLASSIFICATION OF SUBJECT MATTER** |
|---|---|

**H01M 10/54**(2006.01)i

According to International Patent Classification (IPC) or to both national classification and IPC

| **B.** | **FIELDS SEARCHED** |
|---|---|

Minimum documentation searched (classification system followed by classification symbols)

H01M 10/54(2006.01); B02C 19/00(2006.01); B02C 23/08(2006.01); C01B 31/02(2006.01); C01B 32/00(2017.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐 배터리 (waste battery), 방전 (discharge), 파쇄 (crush), 팽창 (swell), 냉각 (cool)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | KR 10-2447931 B1 (ECOPRO MATERIALS, CO., LTD.) 28 September 2022 (2022-09-28)<br>See abstract; claim 1; paragraph [0058]; and figure 5. | 1-15 |
| A | KR 10-1889086 B1 (NH RECYTECH COMPANY) 17 August 2018 (2018-08-17)<br>See abstract; claim 1; and figure 1. | 1-15 |
| A | KR 10-2441685 B1 (BATTERY R&D ASSOCIATION OF KOREA) 13 September 2022 (2022-09-13)<br>See abstract; claim 1; and figure 2. | 1-15 |
| A | KR 10-2022-0103815 A (OMEGA HARVESTED METALLURGICAL, INC.) 22 July 2022 (2022-07-22)<br>See entire document. | 1-15 |
| A | KR 10-1883100 B1 (UIF (UNIVERSITY INDUSTRY FOUNDATION), YONSEI UNIVERSITY) 27 July 2018 (2018-07-27)<br>See entire document. | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 March 2024** | **12 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/020116**

| Patent document cited in search report | | | Publication date (day/month/year) | Patent family member(s) | | | Publication date (day/month/year) |
|---|---|---|---|---|---|---|---|
| KR | 10-2447931 | B1 | 28 September 2022 | WO | 2023-132486 | A1 | 13 July 2023 |
| KR | 10-1889086 | B1 | 17 August 2018 | KR | 10-2018-0065471 | A | 18 June 2018 |
| KR | 10-2441685 | B1 | 13 September 2022 | None | | | |
| KR | 10-2022-0103815 | A | 22 July 2022 | EP | 4082066 | A1 | 02 November 2022 |
| | | | | GB | 2606108 | A | 26 October 2022 |
| | | | | GB | 2606108 | B | 07 June 2023 |
| | | | | JP | 2023-502147 | A | 20 January 2023 |
| | | | | JP | 7295596 | B2 | 21 June 2023 |
| | | | | KR | 10-2510249 | B1 | 14 March 2023 |
| | | | | TW | 202133485 | A | 01 September 2021 |
| | | | | TW | I753719 | B | 21 January 2022 |
| | | | | US | 11121418 | B2 | 14 September 2021 |
| | | | | US | 2021-0203017 | A1 | 01 July 2021 |
| | | | | WO | 2021-137880 | A1 | 08 July 2021 |
| KR | 10-1883100 | B1 | 27 July 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220180194